# EUROPÄISCHE PATENTSCHRIFT

(11) **EP 4 182 159 B1**
(45) Veröffentlichungstag und Bekanntmachung des Hinweises auf die Patenterteilung: **28.08.2024**
(21) Anmeldenummer: 21745954.4
(22) Anmeldetag: 14.07.2021
(51) Int. Cl.: B30B 9/24, B30B 15/34, A22C 17/04

(54) **VORRICHTUNG UND VERFAHREN ZUM TRENNEN VON MITEINANDER VERMISCHTEN STOFFEN UNTERSCHIEDLICHER FLIESSFÄHIGKEIT**
APPARATUS AND METHOD FOR SEPARATING SUBSTANCES OF DIFFERENT FLOWABILITY THAT ARE MIXED TOGETHER
DISPOSITIF ET PROCÉDÉ DE SÉPARATION DE SUBSTANCES AYANT DES FLUIDITÉS DIFFÉRENTES MÉLANGÉES ENTRE ELLES

(30) Priorität: 15.07.2020 DE 102020118720
(43) Veröffentlichungstag der Anmeldung: 24.05.2023
(73) Patentinhaber: NORDISCHER MASCHINENBAU RUD. BAADER GMBH + CO KG, 23560 Lübeck (DE); Linde GmbH, 82049 Pullach (DE)
(72) Erfinder: TOBEY, Andreas, 23560 Lübeck (DE); MEINLSCHMIDT, Pia, 23560 Lübeck (DE); HÄRTLEIN, Joachim, 23560 Lübeck (DE); FUCHS, Michael, 23560 Lübeck (DE); HANF, Friedemann, 23560 Lübeck (DE); DOLEZSAJ, Laszlo, 22393 Hamburg (DE)
(74) Vertreter: Stork Bamberger Patentanwälte PartmbB
(86) Internationale Anmeldenummer: PCT/EP2021/069645
(87) Internationale Veröffentlichungsnummer: WO 2022/013305

(56) Entgegenhaltungen:
- EP-A1- 0 676 144
- WO-A1-2015/150433
- DE-A1- 3 516 623
- DE-A1- 4 116 476
- DE-A1- 4 319 062
- US-A- 4 018 389
- US-A- 4 156 384

## Beschreibung

Die Erfindung betrifft eine Vorrichtung, ausgebildet und eingerichtet zum Trennen von miteinander vermischten Stoffen unterschiedlicher Fließfähigkeit, umfassend ein Rahmengestell, eine umlaufend angetriebene und am Rahmengstell gelagerte Hohltrommel mit perforierter Mantelfläche und mindestens einer mindestens teilweise offenen Stirnseite, ein von außen an die Mantelfläche unter Umschlingung eines Teils des Umfangs der Hohltrommel anpressbares, endloses Pressband, das umlaufend angetrieben ist, einen durch Pressband und Hohltrommel gebildeten Produkt-Einzugskeil zum Leiten eines aus Pressgut bestehenden Produktstroms zwischen die Hohltrommel und das Pressband in einem Einlaufbereich des Produktstroms in die Vorrichtung, eine Stützvorrichtung für das Pressband mit wenigstens einem Stützelement, das auf der der Hohltrommel entgegengesetzten Seite des Pressbandes angeordnet ist, sowie eine Einrichtung zum Abführen von durch die perforierte Mantelfläche in den Hohlraum der Hohltrommel gepresstem Separiergut aus der mindestens teilweise offenen Stirnseite der Hohltrommel.

Die Erfindung betrifft weiterhin ein Verfahren zum Trennen von miteinander vermischten Stoffen unterschiedlicher Fließfähigkeit, umfassend die Schritte: Zuführen eines aus Pressgut bestehenden Produktstroms in einen Produkt-Einzugskeil, der durch eine Hohltrommel mit perforierter Mantelfläche und ein Pressband, das von außen an der Hohltrommel unter Umschlingung eines Teils des Umfangs anliegt, gebildet ist, umlaufendes Antreiben der Hohltrommel und/oder des Pressbandes zum Einziehen des Produktstroms zwischen die Hohltrommel und das Pressband, wobei die leichter fließenden Bestandteile des Produktstroms mittels des Pressbandes als Separiergut durch die Perforation der Mantelfläche der Hohltrommel in den Hohlraum der Hohltrommel gepresst und aus einer mindestens teilweise offenen Stirnseite der Hohltrommel abgeführt werden, während die schwerer fließenden Bestandteile des Produktstroms außen auf der Mantelfläche der Hohltrommel verbleiben und separat abgegeben werden.

Einer Trennung im Sinne der Erfindung zugänglich sind Stoffe, Materialien bzw. Produkte, die sich bzw. deren Zusammensetzung sich durch ihr voneinander abweichendes Fließverhalten unterscheiden. Die Möglichkeit und/oder Notwendigkeit der Trennung von miteinander vermischten Stoffen unterschiedlicher Fließfähigkeit besteht insbesondere bei der Produktion von Lebensmitteln aus tierischem Ursprung (etwa der Abtrennung des Fleisches von der Haut, Sehnen, Knochen bzw. Gräten etc.), aus Obst und Gemüse (etwa der Abtrennung des Fruchtfleisches von Schale, Stielen, Kernen bzw. Steinen etc.), bei der Aufarbeitung von fehlverpackten Lebensmitteln (etwa der Abtrennung von Butter oder Käse vom Verpackungsmaterial) oder dergleichen. Konkrete Anwendungsbeispiele sind z.B. das Entkernen von Datteln oder das Entpacken von in Folie verpackten Käsescheiben.

Beim Verwerten, Entkernen oder Entpacken oder jedem anderen entsprechenden Separieren wird ein Produktstrom ausgehend von einem Produktzuführbereich mit einem Produkt-Einzugskeil zwischen dem Presselement, also z.B. dem Pressband, und der Hohltrommel hindurch zu einem Produktausgabebereich gefördert. Der Produkt-Einzugskeil wird durch die Anordnung von Pressband zu Hohltrommel gebildet und führt im Einlaufbereich des Produktstroms in die Vorrichtung zu einem (Einlauf-) Winkel. Durch den umlaufenden Antrieb der Hohltrommel und/oder den umlaufenden Antrieb des Pressbandes wird der Produktstrom im Einlaufbereich in Förderrichtung F zwischen die Hohltrommel und das Pressband eingezogen, so dass zwischen dem Pressband und der Hohltrommel ein (mit Produktstrom gefüllter) Abstand/Spalt entsteht. Hinter dem Produkteinzugskeil (bezogen auf die Förderrichtung des Produktstroms) ergibt sich zwischen dem Pressband und der Hohltrommel durch die Umschlingung ein Pressbereich, durch den der Produktstrom gefördert wird. Dabei werden die Stoffe unterschiedlicher Fließfähigkeit getrennt, indem die leichter fließenden Stoffe, am Beispiel der Verarbeitung der Produkte aus tierischem Ursprung das Fleisch, mindestens teilweise als Separiergut, das am Beispiel der Produkte aus tierischem Ursprung aus kleinen Fleischfäden bzw. kleinen Fleischsträngen besteht, in die Hohltrommel gedrückt und von dort abgeführt werden. Das Abführen erfolgt über eine mindestens teilweise geöffnete Stirnseite der Hohltrommel z.B. auf der Vorderseite der Vorrichtung, wobei die Vorderseite auch als Rückseite definiert werden kann. Die schwerer fließenden Stoffe, wiederum am Beispiel der Produkte aus tierischen Ursprung die Knochen, Sehnen, Haut etc., werden in Förderrichtung F des Produktstroms hinter der Hohltrommel im Produktausgabebereich gesammelt und abgeführt. Der durch die perforierte Mantelfläche M ins Innere der Hohltrommel, also in den Hohlraum, gedrückte Anteil des Produktstroms wird abgeführt und zur Weiterverarbeitung geleitet. Allerdings haftet der nicht durch die perforierte Mantelfläche M ins Innere der Hohltrommel gedrückte Reststrom des Produktstroms einschließlich der schwerer fließenden Bestandteile üblicherweise mindestens teilweise außen an der Mantelfläche der Hohltrommel. Dieser außen an der Hohltrommel anhaftende Reststrom kann z.B. durch Abstreifmittel gelöst werden.

Der Produktstrom wird von außen mittels des Pressbandes oder jedes anderen Presselementes gegen die perforierte Mantelfläche der Hohltrommel gedrückt. Unter diesem Druck werden die leichter fließenden Bestandteile des Produktstroms durch die Perforation der Mantelfläche als Separiergut in den inneren Hohlraum der rotierenden Hohltrommel gepresst, während die schwerer fließenden Bestandteile des Produktstroms außen auf der Mantelfläche der Hohltrommel verbleiben und ggf. im Auslaufbereich in Förderrichtung F hinter der Hohltrommel abgeführt werden. Beim Einzug des Produktstroms zwischen die Hohltrommel und das Pressband einerseits sowie beim eigentlichen Trennprozess treten erhebliche Drücke und eine hohe Reibung auf, wodurch sich der Produktstrom und insbesondere das durch die Perforation gepresste bzw. gequetschte Separiergut erwärmt. Insbesondere in der nahrungsmittelverarbeitenden Industrie ist es bei der Verarbeitung gerade von Frischeprodukten, wie Fleisch und Obst, von besonderer Bedeutung, die Produkte möglichst durchgängig zu kühlen bzw. die Kühlunterbrechungen möglichst gering zu halten. Bisher ist es üblich, das zu verarbeitende Produkt bzw. den Produktstrom vor der Verarbeitung zu kühlen und das Separiergut nach der Verarbeitung, also nach dem Verlassen der Vorrichtung zu kühlen. Der Produktstrom kann aber auch schon vorerwärmt der Vorrichtung zugeführt werden. Während der Verarbeitung, also während des Trennprozesses innerhalb der Vorrichtung, ist die Kühlung unterbrochen. In jedem Fall wird die Unterbrechung der Kühlkette des Produktstroms bei bekannten Vorrichtungen verlängert. Dadurch erwärmt sich das Separiergut, was durch den Trennprozess aufgrund der mechanischen Belastung noch weiter verstärkt wird. Bisher bekannte Lösungen, bei denen einzelne Komponenten der Vorrichtung gekühlt werden, wie z.B. das Pressband oder Andruckwalzen, reichen nicht aus, um das Separiergut ausreichend zu kühlen. Eine direkte Kühlung z.B. der Hohltrommel ist zu vermeiden, um die Bruchgefahr für die Hohltrommel nicht zu erhöhen.

Bekannte Vorrichtungen und Verfahren zum Trennen von miteinander vermischten Stoffen unterschiedlicher Fließfähigkeit sind in der US 4 156 384 A, der DE 35 16 623 A1, der DE 43 19 062 A1 und der WO 2015/150433 A1 beschrieben. Das Dokument US 4 156 384 A zeigt eine Vorrichtung nach dem Oberbegriff des Anspruchs 1 und ein Verfahren nach dem Oberbegriff des Anspruchs 12.

Der Erfindung liegt somit die Aufgabe zugrunde, eine einfache und zuverlässige Vorrichtung zum produktschonenden Trennen von Stoffen unterschiedlicher Fließfähigkeit vorzuschlagen. Die Aufgabe besteht weiterhin darin, ein entsprechendes Verfahren vorzuschlagen.

Diese Aufgabe wird durch eine Vorrichtung der eingangs genannten Art dadurch gelöst, dass der Hohltrommel eine Kühleinrichtung zugeordnet ist, die zum Kühlen des Separierguts während der Verarbeitung mittels eines kryogenen Kühlmediums ausgebildet und eingerichtet ist, wobei die Kühleinrichtung im Hohlraum der Hohltrommel angeordnet ist und mindestens eine Düse umfasst, die über eine Zuführleitung mit einem Reservoir an Kühlmedium in Verbindung steht. Während der Verarbeitung bedeutet im Zusammenhang mit der Erfindung, dass das Separiergut noch in der Hohltrommel gekühlt wird, und zwar dann und direkt, wenn es als Fleischfaden oder Fleischstrang innenseitig aus den Öffnungen der perforierten Mantelfläche der Hohltrommel quillt. Mit dieser erfindungsgemäßen Ausbildung ist erstmals eine Vorrichtung geschaffen, die eine Verarbeitung und das gleichzeitige Kühlen des Separierguts während der Verarbeitung innerhalb der Vorrichtung ermöglichen. Mit anderen Worten ist mit der erfindungsgemäßen Vorrichtung eine durchgehende Kühlkette auch während des Trennprozesses erreichbar. Zumindest ist eine Verkürzung der Unterbrechung der Kühlkette für das Separiergut sichergestellt, indem das kryogene Kühlmedium während des Pressens, nämlich unmittelbar beim Eintreffen des Separierguts im Hohlraum, direkt auf dieses wirkt. Kryogene Kühlmedien und insbesondere flüssige Kryogene ermöglichen eine effiziente und schnelle Kühlung des Separierguts beim Auftreffen auf dessen Oberfläche. Natürlich sind auch kryogene Gase einsetzbar, die unter Normaldruck bei einer kritischen Temperatur unterhalb der Raumtemperatur verflüssigen. Da das Separiergut mit seinen schmalen Fleischfäden bzw. Fleischsträngen eine sehr große Oberfläche aufweist, ist die Kühlwirkung entsprechend, und insbesondere bei der Beaufschlagung mit flüssigem, kryogenem Kühlmedium, hoch. Damit wird ein besonders produktschonender Trennprozess ermöglicht, da aufgrund der Kühlung des Separierguts schon innerhalb der Vorrichtung ein Erwärmen durch mechanische Belastung kompensiert bzw. sogar überkompensiert und eine bisher nicht erreichte Prozesskontrolle und Produktqualität des Separierguts zur Verfügung gestellt wird. Dadurch ist zum einen eine kompakte und einfache Bauweise realisiert. Zum anderen kann das flüssige kryogene Kühlmedium einfach und gleichmäßig auf das Separiergut verteilt werden. Die Anzahl der Düsen kann ebenso variieren wie deren Positionierung im Hohlraum. Vorzugsweise sind die Düsen an einem Tragarm oder dergleichen angeordnet, der durch die mindestens teilweise geöffnete Stirnseite der Hohltrommel in diese hineinragt, so dass die Rotation der Hohltrommel nicht beeinträchtigt ist. Die oder jede Düse ist über eine flexible oder starre Zuführleitung mit dem Reservoir verbunden. Die oder jede Düse kann aber auch über eine dann im Wesentlichen starre Zuführleitung im Hohlraum gehalten sein. Als Reservoir können geeignete Behälter zum Speichern der flüssigen Kryogene, wie Stickstoff, Helium, Argon, Kohlendioxid oder dergleichen dienen, die über geeignete Zuführleitungen die Düsen mit dem Kühlmedium speisen.

Vorzugsweise ist die oder jede Düse mindestens auf den Bereich der Innenfläche der Hohltrommel gerichtet, der etwa dem Bereich des Produkt-Einzugskeils und/oder dem sich daran anschließenden Pressbereich gegenüberliegt. Damit ist ein signifikantes Kühlen des Separierguts direkt am Verarbeitungsort sichergestellt. Unmittelbar beim Entstehen bzw. während des Entstehens des fadenförmigen/strangförmigen Separierguts wird dieses noch im Innenraum der Hohltrommel gekühlt und kann dann gekühlt abgeführt werden.

Eine bevorzugte Weiterbildung ist dadurch gekennzeichnet, dass die oder jede Düse als Flachstrahldüse ausgebildet ist, die eine Düsenöffnung zur Bildung eines Sprühfächers aufweist, derart, dass das aus der Düse austretende Kühlmedium eine linienförmige und sich über die gesamte Breite der Hohltrommel erstreckende Beaufschlagung des durch die Mantelfläche gepressten Separierguts gewährleistet. Mit der oder jeder Flachstrahldüse ist eine optimale Einbringung des Kühlmediums sichergestellt. Die Linie kann auch breiter ausgebildet sein, so dass eine flächige (rechteckförmige) Beaufschlagung ermöglicht ist. Das freie Ende des Sprühfächers weist eine Breite auf, die mindestens der Breite bzw. der Tiefe der Innenfläche der Hohltrommel entspricht, so dass über die Breite/Tiefe jede Öffnung der perforierten Mantelfläche innenseitig von dem Sprühfächer erfasst ist.

Vorteilhafterweise ist der oder jeder Düse eine Abdeckung zugeordnet, die die oder jede Düse mindestens teilweise abdeckt. Die vorzugsweise dachförmige Abdeckung schützt einerseits die Düse bzw. die Düsenöffnung vor Verschmutzung durch von der Innenfläche der Hohltrommel abfallendem Separiergut und gewährleistet zum anderen den freien Zugang des Sprühfächers auf das Separiergut. Andere Konstruktionen zum teilweisen Abschirmen der Düse sind aber ebenfalls einsetzbar.

Besonders bevorzugt ist der Kühlreinrichtung eine Einrichtung zum Sammeln und Abführen des in den Hohlraum der Hohltrommel geleiteten Kühlmediums zugeordnet. Das in der flüssigen Phase auf das Separiergut treffende kryogene Kühlmedium verflüchtigt sich nach dem Auftreffen mindestens teilweise bzw. wird in die gasförmige Phase überführt. Das erwärmte oder sich erwärmende Kühlmedium wird entsprechend in Gasform, als Aerosol, Nebel, Dampf, Rauch oder auch noch in flüssiger Tröpfchenform abgesaugt und abgeführt, um die Umgebung und die Bedienperson zu schützen.

Vorzugsweise umfasst die Einrichtung zum Sammeln des Kühlmediums mindestens eine Abdeckhaube und einen über Abluftleitungen mit der Abdeckhaube verbundenen Abluftventilator. Nach dem Prinzip z.B. einer Dunstabzugshaube, die z.B. vor der offenen Stirnseite der Hohltrommel positioniert ist, kann das "verbrauchte" Kühlmedium gesammelt und z.B. über eine Abluftleitung bzw. einen Abluftventilator oder dergleichen abgeleitet werden. Andere Absaugsysteme innerhalb oder außerhalb der Hohltrommel sind aber ebenfalls einsetzbar.

Besonders bevorzugt umfasst die oder jede Zuführleitung zum Zuführen des kryogenes Kühlmediums zu der oder jeder Düse eine Mess- und/oder Regelungstrecke. Die Mess- und/oder Regelungsstrecke kann innerhalb der Zuführleitung ausgebildet sein oder diese mindestens abschnittsweise ersetzen. Mittels der Mess- und/oder Regelungsstrecke können u.a. z.B. Zuflussmenge, Temperatur, Zuflussgeschwindigkeit etc. des Kühlmediums überwacht und geregelt werden, um einen optimalen Kühlungseffekt zu erreichen. Mit anderen Worten lässt sich eine Wunschtemperatur für eine optimale Prozesskontrolle und Produktqualität einstellen. Optional können z.B. auch Undichtigkeiten in der Zuführleitung überwacht und zu Regelungszwecken ausgewertet werden.

In einer besonders vorteilhaften Ausführung ist das kryogene Kühlmedium flüssiger Stickstoff (LIN=liquid nitrogen bzw. als LN₂ bekannt). Stickstoff ist einerseits ein gut verfügbares Medium und weist andererseits eine hohe Kühlleistung auf. Besonders vorteilhaft ist Stickstoff deshalb, da damit innerhalb der Hohltrommel und insbesondere im Bereich der Oberfläche des Separierguts eine inerte Atmosphäre geschaffen ist. Es kann der Stickstoff selbstverständlich auch in Gasform zum Kühlen eingesetzt werden. Der in der Umgebungsluft enthaltene Sauerstoff (O₂) gelangt nicht mehr an das Produkt. Dadurch werden bestimmte chemische Reaktionen des Separierguts vermieden, wodurch das Separiergut frischer gehalten werden kann. Auch das Keimwachstum am und im Separiergut kann durch die inerte Atmosphäre reduziert werden.

In einer weiteren vorteilhaften Ausführungsform ist das kryogene Kühlmedium flüssiges Kohlendioxid (LIC=liquid carbon dioxid bzw. als LCO₂ bekannt). Kohlendioxid ist ebenfalls umfänglich verfügbar und weist eine besonders hohe Kühlwirkung auf. Es kann das Kohlendioxid selbstverständlich auch in Gasform zum Kühlen eingesetzt werden. Andere kryogene Medien können selbstverständlich ebenfalls eingesetzt werden.

Zweckmäßigerweise umfasst die Einrichtung zum Abführen des Separierguts ein Abstreifelement und/oder eine Auswurfschnecke. In einzelnen Ausführungen können beide Komponenten vorgesehen sein. Bevorzugt ist jedoch entweder eine Auswurfschnecke oder ein Abstreifelement vorgesehen. Andere Mittel zum Lösen des Separierguts von der Innenfläche und/oder zum Abführen des Separierguts aus der Hohltrommel sind aber ebenfalls einsetzbar.

Vorteilhafterweise umfasst das Abstreifelement eine Produktabstreifkante und eine Produktleitfläche, wobei die Produktleitfläche derart geformt und/oder ausgerichtet ist, dass das von der Innenfläche der Hohltrommel mittels der Produktabstreifkante abgestreifte Separiergut in Richtung der offenen Stirnseite der Hohltrommel geleitet wird. Das Abstreifelement kann z.B. an einem in den Hohlraum der Hohltrommel hineinragenden Träger angeordnet sein. Vorzugsweise ist das Abstreifelement an einer am Rahmengestell vorzugsweise lösbar befestigten Traverse angeordnet, derart, dass das Abstreifelement durch die mindestens teilweise offene Stirnseite in die Hohltrommel ragt. Das Abstreifelement kann mehrteilig oder einteilig ausgebildet sein. Das mittels des Abstreifelementes oder der Auswurfschnecke oder jedem anderen Mittel aus der Hohltrommel abgeführte Separiergut kann z.B. auf eine vorzugsweise gekühlte Wanne, Rinne oder jedes andere Abförderelement fallen und zur Weiterverarbeitung abtransportiert werden.

Die Aufgabe wird auch durch ein Verfahren mit den eingangs genannten Schritten dadurch gelöst, dass das durch die perforierte Mantelfläche in den Hohlraum der Hohltrommel gepresste Separiergut mittels eines kryogenen Kühlmediums in der Hohltrommel gekühlt wird, wobei das Separiergut direkt und unmittelbar während des Trennprozesses, also beim Pressen durch die Mantelfläche und/oder beim Abführen aus der Hohltrommel, mit dem kryogenen Kühlmedium beaufschlagt wird. Dadurch wird die Temperaturerhöhung durch die mechanische Belastung nicht nur kompensiert, sondern die Temperatur des Separierguts kann sogar noch weiter verringert werden. Das vorzugsweise flüssige kryogene Kühlmedium trifft auf das Separiergut und kühlt dieses, wobei sich das kryogene Kühlmedium nach dem Auftreffen nach und nach mindestens teilweise wieder in die gasförmige Phase umwandelt.. Das Kühlen erfolgt also bereits innerhalb der Vorrichtung, sobald die Fleischfäden oder Fleischstränge durch die perforierte Mantelfläche in das Innere der Hohltrommel drücken. Dadurch trifft das Kühlmedium zum frühest möglichen Zeitpunkt auf das Separiergut.

Besonders vorteilhaft wird das Kühlmedium linienförmig über die gesamte Breite der Hohltrommel auf das durch den Trennprozess zerkleinerte Separiergut aufgebracht. Ein flächiger Auftrag, z.B. fächerförmig oder dergleichen, ist ebenfalls möglich.

In einer bevorzugten Variante wird das Separiergut mit Stickstoff (N₂) als kryogenem Kühlmedium beaufschlagt.

In einer weiteren vorteilhaften Option wird das Separiergut mit Kohlendioxid (CO₂) als kryogenem Kühlmedium beaufschlagt.

Vorteilhafterweise wird über das Zuführen des Kühlmediums auf das Separiergut die Wunschtemperatur desselben gesteuert. Durch das Beaufschlagen des Separierguts mit dem Kühlmedium und der Steuerung desselben u.a. hinsichtlich Temperatur und/oder Menge und/oder Geschwindigkeit kann eine optimale Prozesskontrolle und Produktqualität erzeugt werden.

Eine besonders vorteilhafte Weiterbildung zeichnet sich dadurch aus, dass das in den Hohlraum der Hohltrommel geleitete Kühlmedium gesammelt und abgeführt wird. Entstehende Gase, Aerosole, Nebel, Dampf, Rauch oder auch Tröpfchen, also das gesamte "unverbrauchte" Kühlmedium, können abgesaugt werden, um die Umgebung und insbesondere die Bedienpersonen zu schützen.

Vorzugsweise wird das gekühlte Separiergut von der Innenfläche der Hohltrommel abgestreift und aus der Hohltrommel abgeführt.

Ganz besonders bevorzugt wird das Verfahren mit einer Vorrichtung nach einem oder mehreren der Ansprüche 1 bis 11 ausgeführt.

Weitere sich aus den vorgenannten Verfahrensschritten ergebenden Vorteile wurden bereits im Zusammenhang mit der Vorrichtung beschrieben, weshalb zur Vermeidung von Wiederholungen auf die obigen Ausführungen verwiesen wird.

Weitere zweckmäßige und/oder vorteilhafte Merkmale und Weiterbildungen der Vorrichtung sowie des Verfahrens ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:
- Fig. 1: eine schematische Darstellung der erfindungsgemäßen Vorrichtung in einer perspektivischen Ansicht,
- Fig. 2: die Darstellung der Vorrichtung gemäß Figur 1 mit Einblick in die Hohltrommel mit der Kühleinrichtung,

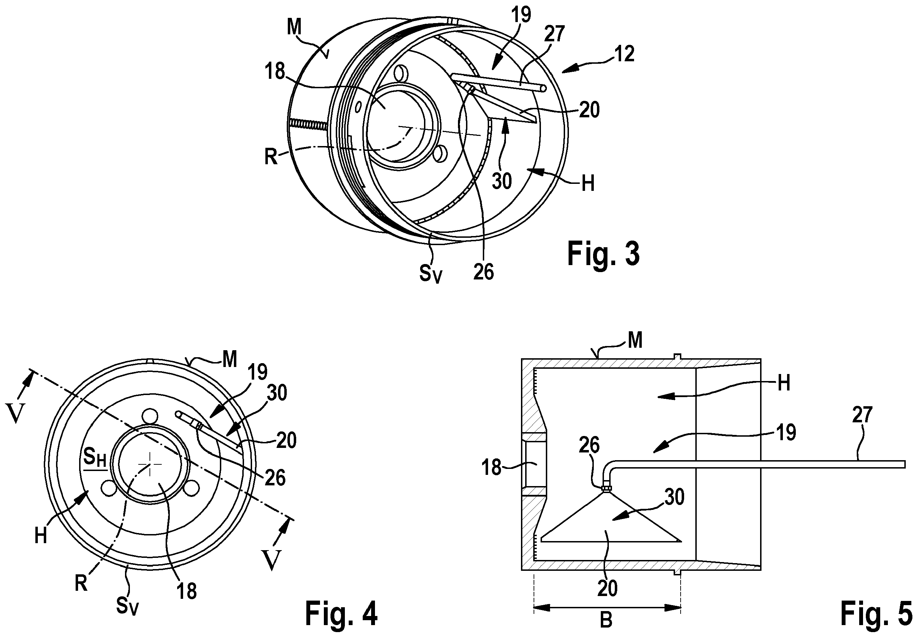

- Fig. 3: die Hohltrommel als Einzelteil mit schematisch angedeuteter Kühleinrichtung in perspektivischer Ansicht,
- Fig. 4: die Hohltrommel in Vorderansicht in die offene Stirnseite hinein,
- Fig. 5: die Hohltrommel im Schnitt V-V gemäß Figur 4, und

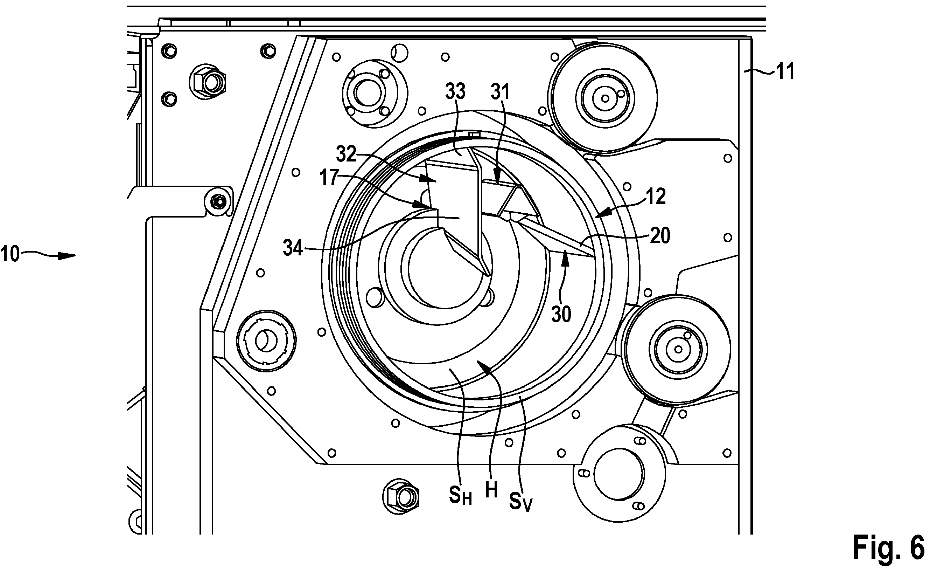

- Fig. 6: eine weitere Ausführungsform der Hohltrommel in perspektivischer Ansicht in die offene Stirnseite.

Die in der Zeichnung dargestellte Vorrichtung dient zum Trennen von Fleisch einerseits und Knochen, Knochenresten, Sehnen, Knorpeln und dergleichen andererseits und weist eine Mehrzahl bevorzugter Merkmale auf. Andere Ausführungsformen, die weniger oder andere Merkmale aufweisen, sind nicht explizit dargestellt. Die Vorrichtung kann in gleicher Weise auch zum Trennen z.B. von Fruchtfleisch von Kernen oder zum Trennen jeglicher anderen vermischten Stoffe unterschiedlicher Fließfähigkeit eingesetzt werden.

Die dargestellte Vorrichtung 10 ist zum Trennen von miteinander vermischten Stoffen unterschiedlicher Fließfähigkeit ausgebildet und eingerichtet. Die Vorrichtung 10 umfasst ein Rahmengestell 11, eine umlaufend angetriebene und am Rahmengstell 11 gelagerte Hohltrommel 12 mit perforierter Mantelfläche M und mindestens einer mindestens teilweise offenen Stirnseite S_{V},S_{H}, ein von außen an die Mantelfläche unter Umschlingung eines Teils des Umfangs der Hohltrommel 12 anpressbares, endloses Pressband 13, das umlaufend angetrieben ist, einen durch Pressband 13 und Hohltrommel 12 gebildeten Produkt-Einzugskeil 14 zum Leiten eines aus Pressgut bestehenden Produktstroms zwischen die Hohltrommel 12 und das Pressband 13 in einem Einlaufbereich E des Produktstroms in die Vorrichtung 10, eine Stützvorrichtung 15 für das Pressband 13 mit wenigstens einem Stützelement 16, das auf der der Hohltrommel 12 entgegengesetzten Seite des Pressbandes 13 angeordnet ist, sowie eine Einrichtung 17 zum Abführen von durch die perforierte Mantelfläche M in den Hohlraum H der Hohltrommel 12 gepresstem Separiergut aus der mindestens teilweise offenen Stirnseite S_{V}, S_{H} der Hohltrommel 12.

Die Einrichtung 17 zum Abführen des Separierguts aus der Hohltrommel 12 kann integraler Bestandteil der Hohltrommel 12 oder als separate Komponente ausgebildet sein. Die zur Vorderseite weisende Stirnseite Sv der Hohltrommel 12 ist offen ausgebildet, die gegenüberliegende Stirnseite S_{H} ist vorzugsweise geschlossen ausgebildet. Die dargestellte Öffnung 18 in der rückseitigen Stirnwand S_{H} dient zur Aufnahme bzw. Lagerung der Hohltrommel 12 auf einer Antriebswelle. Vorderseite und Rückseite können auch vertauscht sein.

Diese Vorrichtung 10 zeichnet sich erfindungsgemäß dadurch aus, dass der Hohltrommel 12 eine Kühleinrichtung 19 zugeordnet ist, die zum Kühlen des Separierguts während der Verarbeitung mittels eines kryogenen Kühlmediums 20 ausgebildet und eingerichtet ist.

Das Rahmengestell 11 kann z.B. ein geschlossenes oder mindestens teilweise geschlossenes Gehäuse oder eine Profilkonstruktion oder dergleichen sein. Bevorzugt ist das Gehäuse allseitig im Wesentlichen geschlossen. Am oder im Rahmengestell 11 ist die (nicht dargestellte) Antriebseinheit für die Hohltrommel 12 und/oder das Pressband 13 angeordnet. Die Antriebseinheit kann einen gemeinsamen Antrieb oder separate Antriebsmittel umfassen. Die Rotationsachse R der Hohltrommel 12 verläuft quer zur Förderrichtung F des Produktstroms. In der perforierten Mantelfläche M der Hohltrommel 12 sind (in der Figur nur angedeutete und nicht explizit dargestellte) Bohrungen/Öffnungen ausgebildet, die in unterschiedlichen Mustern angeordnet sein können und den Durchtritt von Teilen des Produktstroms, insbesondere den leichter fließenden, weichen und quetschfähigen Teilen, in das Innere der Hohltrommel 12 erlauben. Die Hohltrommel 12 ist bevorzugt in ihrer gesamten Tiefe bzw. Breite B, die den Arbeitsbereich bildet, mit den Öffnungen versehen. Das Pressband 13 besteht vorzugsweise aus einem elastischen Werkstoff, z.B. Gummi, Polyurethan oder dergleichen und ist um mehrere Umlenkelemente 21 geführt. Vorzugsweise ist ein Umlenkelement 21 als Antriebswalze 22 ausgebildet und eingerichtet. Besonders bevorzugt ist das Umlenkelement 21, das in Förderrichtung F hinter der Hohltrommel 12 platziert ist, die Antriebswalze 22, um das Pressband 13 und damit den Produktstrom ziehend an der Hohltrommel 12 vorbeizuführen. Besonders bevorzugt ist die Antriebswalze 22 gleichzeitig als Andruckwalze und/oder Spannwalze für das Pressband 13 ausgebildet und eingerichtet. Dazu ist die Antriebswalze 22 verstellbar ausgebildet. Durch den eigenen Antrieb der Hohltrommel 12 kann das Fördern des Produktstroms in Förderrichtung F noch unterstützt werden.

Optional können im Einlaufbereich E, also oberhalb des Produkt-Einzugskeils 14, und/oder im Auslaufbereich A, also in Förderrichtung F hinter der Hohltrommel 12, die auch als Lochtrommel bezeichnet wird, Abstreifelemente angeordnet sein. Diese Abstreifelemente können starr, also mit einem festen Abstand zur Hohltrommel 12 bzw. genauer zur Mantelfläche M, oder variabel steuerbar, also im Abstand zur Hohltrommel 12 bzw. genauer zur Mantelfläche M veränderlich, ausgebildet sein. Die Hohltrommel 12 und das Pressband 13 können mit gleicher Geschwindigkeit angetrieben werden. Optional können die Hohltrommel 12 und das Pressband 13 jedoch auch mit unterschiedlichen Geschwindigkeiten angetrieben werden. Die Geschwindigkeitsdifferenz ist mittels einer Steuer- und/oder Regelungseinrichtung 23 steuerbar und/oder regelbar. Die Stützvorrichtung 15 kann eine Stützkette oder ein Stützband sein. In der dargestellten Ausführung ist die Stützvorrichtung 15 als Rollenbahn 24 ausgebildet, die mehrere Rollen 25 umfasst, die in Förderrichtung F des Produktstroms hintereinander angeordnet und mindestens teilweise federnd gelagert sind.

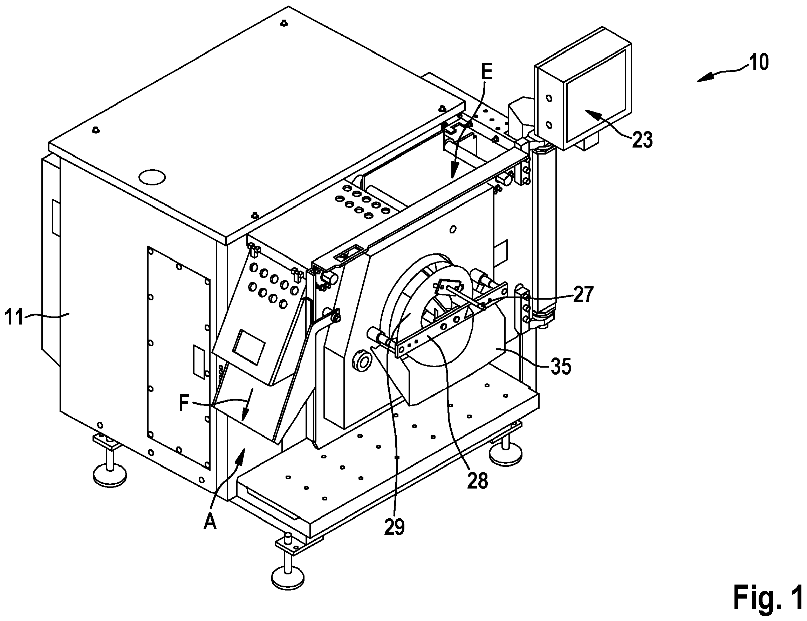

Erfindungsgemäß ist die Kühleinrichtung 19 im Hohlraum H der Hohltrommel 12 angeordnet und umfasst mindestens eine Düse 26, die über eine Zuführleitung 27 mit einem (nicht explizit dargestellten) Reservoir an Kühlmedium 20 in Verbindung steht. Die Zuführleitung 27 ist aus der offenen Stirnseite Sv der Hohltrommel 12 herausgeführt. In der Figur 1 ist erkennbar, dass vor der offenen Stirnseite Sv eine Traverse 28 angeordnet ist, die lösbar am Rahmengestell 11 befestigt ist. An der Traverse 28 ist die Zuführleitung 27 abgestützt, und zwar wahlweise direkt oder, wie dargestellt, indirekt über eine Art Spritzschutzwand 29, die die offene Stirnseite Sv mindestens teilweise abdeckt. In der Zeichnung ist nur eine einzelne Düse 26 dargestellt. Optional sind aber auch mehrere Düsen 26 einsetzbar. Andere Möglichkeiten der Befestigung, des Abstützens oder des Aufliegens der Düse 26 und/oder der Zuführleitung 27 sind ebenfalls möglich.

Die oder jede Düse 26 ist auf den Bereich der Innenfläche der Hohltrommel 12 gerichtet, der etwa dem Bereich des Produkt-Einzugskeils 14 und/oder dem sich daran anschließenden Pressbereich P gegenüberliegt. Beispielsweise kann eine Düse 26 oder Düsenleiste auf den Bereich des Produkt-Einzugskeils 14 gerichtet sein - wie dargestellt -, während eine zweite Düse 26 oder Düsenleiste - nicht dargestellt - auf den Pressbereich P gerichtet ist. Die Position und/oder Ausrichtung jeder Düse 26 ist jedoch variabel und veränderbar. Vorzugsweise ist die oder jede Düse 26 als Flachstrahldüse ausgebildet, die eine Düsenöffnung zur Bildung eines Sprühfächers 30 aufweist, derart, dass das aus der Düse 26 austretende Kühlmedium 20 eine linienförmige und sich über die gesamte Tiefe/Breite B der Hohltrommel 12 erstreckende Beaufschlagung des durch die Mantelfläche M gepressten Separierguts gewährleistet. Anders ausgedrückt deckt der Sprühfächer 30 vorzugsweise die gesamte Arbeitsbreite der Hohltrommel 12 ab. Andere Bauarten der Düsen 26 mit unterschiedlichen Düsenöffnungen sind aber ebenfalls einsetzbar.

Die oder jede Düse 26 kann frei im Hohlraum H angeordnet sein. Bevorzugt ist der oder jeder Düse 26 eine Abdeckung 31 zugeordnet, die die oder jede Düse 26 mindestens teilweise abdeckt. Die Abdeckung 31 ist dachförmig ausgebildet und vorzugsweise ebenfalls an der Traverse 28 angeordnet. Unterhalb der nach oben geschlossenen und nach unten offenen Abdeckung 31 ist die oder jede Düse 26 angeordnet, so dass der Sprühfächer 30 hindernisfrei gebildet werden kann.

Optional kann die Vorrichtung 10 eine (nicht explizit dargestellte) Einrichtung zum Sammeln und Abführen des in den Hohlraum H der Hohltrommel 12 geleiteten Kühlmediums 20 umfassen, die der Kühlreinrichtung 19 zugeordnet ist. Die Einrichtung zum Sammeln des Kühlmediums 20 kann mindestens eine Abdeckhaube und einen über Abluftleitungen mit der Abdeckhaube verbundenen Abluftventilator umfassen. Die Abdeckhaube kann z.B. den gesamten Bereich der offenen Stirnseite Sv der Hohltrommel 12 umschließen im Sinne von abdecken, so dass ein Absaugen des verbrauchten, mindestens überwiegend gasförmigen Kühlmediums 20 sichergestellt ist. Andere Konstruktionen zum Absaugen des verbrauchten Kühlmediums 20 aus dem Hohlraum H der Hohltrommel 12 sind ebenfalls einsetzbar.

Die oder jede Zuführleitung 27 zum Zuführen des kryogenes Kühlmediums 20 zu der oder jeder Düse 26 umfasst eine Mess- und/oder Regelungstrecke, die Bestandteil der Vorrichtung 10 oder einer übergeordneten Einheit sein kann. Als kryogenes Kühlmedium 20 wird besonders bevorzugt flüssiger Stickstoff (LN₂) eingesetzt. In anderen Ausführungen kann z.B. auch flüssiges Kohlendioxid (LCO₂) als kryogenes Kühlmedium 20 eingesetzt werden. Die Kühlmedien können auch in Gasform eingesetzt werden.

Das durch die Mantelfläche M gepresste Separiergut kann von alleine, alleine durch die Rotation der Hohltrommel 12, aus dieser abgeführt werden. Dann bildet die Hohltrommel 12 selbst die Einrichtung 17 zum Abführen des Separierguts. Vorzugsweise umfasst die Einrichtung 17 zum Abführen des Separierguts ein Abstreifelement 32 und/oder eine Auswurfschnecke. In der Zeichnung ist das bevorzugte Abstreifelement 32 dargestellt, das ebenfalls lösbar an der Traverse 28 befestigt sein kann. Das Abstreifelement 32 umfasst eine Produktabstreifkante 33 und eine Produktleitfläche 34, wobei die Produktleitfläche 34 derart geformt und/oder ausgerichtet ist, dass das von der Innenfläche der Hohltrommel 12 mittels der Produktabstreifkante 33 abgestreifte Separiergut in Richtung der offenen Stirnseite Sv der Hohltrommel 12 geleitet wird. Andere Ausbildungen des vorzugsweise einstückig ausgebildeten Abstreifelementes 32 und andere Konstruktionen zum Abführen des Separierguts aus dem Hohlraum H der Hohltrommel 12 sind ebenfalls einsetzbar. Das abgeführte Separiergut kann z.B. auf eine Abführrinne 35 oder dergleichen fallen, die optional gekühlt sein kann und dazu mit einer entsprechenden Einrichtung verbunden ist.

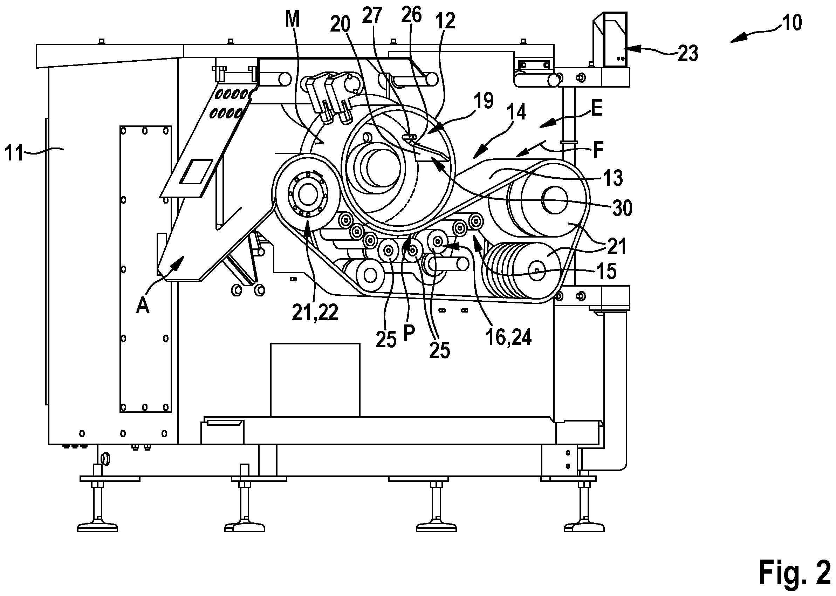

Im Folgenden wird das Verfahren anhand der Zeichnung näher beschrieben. Das Verfahren dient und ist entsprechend zum Trennen von miteinander vermischten Stoffen unterschiedlicher Fließfähigkeit ausgebildet und eingerichtet. Zunächst wird ein aus Pressgut bestehender Produktstrom in einen Produkt-Einzugskeil 14, der durch eine Hohltrommel 12 mit perforierter Mantelfläche M und ein Pressband 13, das von außen an der Hohltrommel 12 unter Umschlingung eines Teils des Umfangs anliegt, gebildet ist, zugeführt. Für den Trennprozess werden die Hohltrommel 12 und das Pressband 13 zum Einziehen des Produktstroms zwischen die Hohltrommel 12 und das Pressband 13 umlaufend angetrieben. Bevorzugt ist die Hohltrommel 12 (in der Ansicht gemäß Figur 1) im Uhrzeigersinn angetrieben, während die Antriebswalze 22 für das Pressband (in der Ansicht gemäß der Figuren 1und 2) entgegen dem Uhrzeigersinn angetrieben ist, so dass die Hohltrommel 12 und das Pressband 13 im Bereich der Umschlingung, also im Pressbereich P, die gleiche Förderrichtung F aufweisen, wobei die Geschwindigkeiten gleich sein oder voneinander abweichen können. Durch den Transport des Produktstroms durch den Pressbereich P werden die leichter fließenden Bestandteile des Produktstroms mittels des Pressbandes 13 als Separiergut durch die Perforation der Mantelfläche M der Hohltrommel 12 in den inneren Hohlraum H der Hohltrommel 12 gepresst und aus einer mindestens teilweise offenen Stirnseite S_{V} und/oder S_{H} der Hohltrommel 12 abgeführt, während die schwerer fließenden Bestandteile des Produktstroms außen auf der Mantelfläche M der Hohltrommel 12 verbleiben und separat abgegeben werden.

Vorzugsweise wird das Pressband 13 während des Trennens des Produktstroms in seine Bestandteile auf der der Hohltrommel 12 entgegengesetzten Seite des Pressbandes 13 durch eine mindestens ein Stützelement 16 umfassende Stützvorrichtung 15 gestützt.

Dieses Verfahren zeichnet sich erfindungsgemäß dadurch aus, dass das durch die perforierte Mantelfläche M in den Hohlraum H der Hohltrommel 12 gepresste Separiergut mittels eines kryogenen Kühlmediums 20 in der Hohltrommel 12 gekühlt wird, wobei das Separiergut direkt und unmittelbar während des Trennprozesses, also beim Pressen durch die Mantelfläche M und/oder beim Abführen aus der Hohltrommel 12, mit dem kryogenen Kühlmedium 20 beaufschlagt wird. Das Kühlmedium 20 wird dazu linienförmig, fächerförmig oder andersförmig über die gesamte Breite B (entsprechend der Arbeitstiefe/-breite) der Hohltrommel 12 - parallel ausgerichtet zur Rotationsachse R der Hohltrommel 12 - auf das durch den Trennprozess zerkleinerte und in der Oberfläche vergrößerte Separiergut aufgebracht. Zur Kühlung des Separierguts wird dieses bevorzugt wahlweise mit flüssigem Stickstoff (LN₂) als flüssigem, kryogenem Kühlmedium 20 oder mit flüssigem Kohlendioxid (LCO₂) als flüssigem, kryogenem Kühlmedium beaufschlagt. Andere flüssige oder gasförmige kryogene Kühlmedien 20 können aber ebenfalls eingesetzt und verwendet werden.

Grundsätzlich kann das unverbrauchte Kühlmedium 20 in Gasform und/oder in flüssiger Form, also z.B. als Aerosol, Dampf, Nebel, Rauch oder dergleichen abhängig vom jeweiligen Kühlmedium 20 in die Umgebung entweichen. Vorzugsweise wird das in den Hohlraum H der Hohltrommel 12 geleitete Kühlmedium 20 gesammelt und abgeführt. Das kann z.B. ein Absaugen sein. Das gekühlte Separiergut kann z.B. durch die Rotation der Hohltrommel 12 aus der offenen Stirnseite Sv der Hohltrommel 12 fallen. Bevorzugt wird das gekühlte Separiergut jedoch von der Innenfläche der Hohltrommel 12 abgestreift und aus der Hohltrommel 12 abgeführt.

Besonders bevorzugt wird die Wunschtemperatur des Separierguts über das Zuführen des Kühlmediums auf das Separiergut gesteuert. Dazu kann die Mess- und/oder Regelungsstrecke innerhalb der Zuführleitung 27 dienen und eingesetzt werden. Mittels der Mess- und/oder Regelungsstrecke können u.a. z.B. Zuflussmenge, Temperatur, Zuflussgeschwindigkeit etc. des Kühlmediums überwacht und geregelt werden, um einen optimalen Kühlungseffekt zu erreichen. Mit anderen Worten lässt sich eine Wunschtemperatur für eine optimale Prozesskontrolle und Produktqualität einstellen.

Ganz besonders bevorzugt wird das Verfahren mit einer Vorrichtung 10 nach einem oder mehreren der Ansprüche 1 bis 11 ausgeführt.

## Patentansprüche

1. Vorrichtung (10), ausgebildet und eingerichtet zum Trennen von miteinander vermischten Stoffen unterschiedlicher Fließfähigkeit, umfassend ein Rahmengestell (11), eine umlaufend angetriebene und am Rahmengstell (11) gelagerte Hohltrommel (12) mit perforierter Mantelfläche (M) und mindestens einer mindestens teilweise offenen Stirnseite (S_{V}, S_{H}), ein von außen an die Mantelfläche unter Umschlingung eines Teils des Umfangs der Hohltrommel (12) anpressbares, endloses Pressband (13), das umlaufend angetrieben ist, einen durch Pressband (13) und Hohltrommel (12) gebildeten Produkt-Einzugskeil (14) zum Leiten eines aus Pressgut bestehenden Produktstroms zwischen die Hohltrommel (12) und das Pressband (13) in einem Einlaufbereich (E) des Produktstroms in die Vorrichtung (10), eine Stützvorrichtung (15) für das Pressband (13) mit wenigstens einem Stützelement (16), das auf der der Hohltrommel (12) entgegengesetzten Seite des Pressbandes (13) angeordnet ist, sowie eine Einrichtung (17) zum Abführen von durch die perforierte Mantelfläche (M) in den Hohlraum (H) der Hohltrommel (12) gepresstem Separiergut aus der mindestens teilweise offenen Stirnseite (S_{V}, S_{H}) der Hohltrommel (12), **dadurch gekennzeichnet, dass** der Hohltrommel (12) eine Kühleinrichtung (19) zugeordnet ist, die zum Kühlen des Separierguts während der Verarbeitung mittels eines kryogenen Kühlmediums (20) ausgebildet und eingerichtet ist, wobei die Kühleinrichtung (19) im Hohlraum (H) der Hohltrommel (12) angeordnet ist und mindestens eine Düse (26) umfasst, die über eine Zuführleitung (27) mit einem Reservoir an Kühlmedium (20) in Verbindung steht.

2. Vorrichtung (10) nach Anspruch 1, **dadurch gekennzeichnet, dass** die oder jede Düse (26) mindestens auf den Bereich der Innenfläche der Hohltrommel (12) gerichtet ist, der etwa dem Bereich des Produkt-Einzugskeils (14) und/oder dem sich daran anschließenden Pressbereich (P) gegenüberliegt.

3. Vorrichtung (10) nach Anspruch 1 oder 2, **dadurch gekennzeichnet, dass** die oder jede Düse (26) als Flachstrahldüse ausgebildet ist, die eine Düsenöffnung zur Bildung eines Sprühfächers (27) aufweist, derart, dass das aus der Düse austretende Kühlmedium (20) eine linienförmige und sich über die gesamte Breite (B) der Hohltrommel (12) erstreckende Beaufschlagung des durch die Mantelfläche (M) gepressten Separierguts gewährleistet.

4. Vorrichtung (10) nach einem oder mehreren der Ansprüche 1 bis 3, **dadurch gekennzeichnet, dass** der oder jeder Düse (26) eine Abdeckung (31) zugeordnet ist, die die oder jede Düse (26) mindestens teilweise abdeckt.

5. Vorrichtung (10) nach einem oder mehreren der Ansprüche 1 bis 4, **dadurch gekennzeichnet, dass** der Kühlreinrichtung (17) eine Einrichtung zum Sammeln und Abführen des in den Hohlraum (H) der Hohltrommel (12) geleiteten Kühlmediums (20) zugeordnet ist.

6. Vorrichtung (10) nach Anspruch 5, **dadurch gekennzeichnet, dass** die Einrichtung zum Sammeln des Kühlmediums mindestens eine Abdeckhaube und einen über Abluftleitungen mit der Abdeckhaube verbundenen Abluftventilator umfasst.

7. Vorrichtung (10) nach einem oder mehreren der Ansprüche 1 bis 6, **dadurch gekennzeichnet, dass** die oder jede Zuführleitung (27) zum Zuführen des kryogenes Kühlmediums (20) zu der oder jeder Düse (26) eine Mess- und/oder Regelungstrecke umfasst.

8. Vorrichtung (10) nach einem oder mehreren der Ansprüche 1 bis 7, **dadurch gekennzeichnet, dass** das kryogene Kühlmedium (20) flüssiger Stickstoff (LIN bzw. LN₂) ist.

9. Vorrichtung (10) nach einem oder mehreren der Ansprüche 1 bis 7, **dadurch gekennzeichnet, dass** das kryogene Kühlmedium (20) flüssiges Kohlendioxid (LIC bzw. LCO₂) ist.

10. Vorrichtung (10) nach einem oder mehreren der Ansprüche 1 bis 9, **dadurch gekennzeichnet, dass** die Einrichtung (17) zum Abführen des Separierguts ein Abstreifelement (32) und/oder eine Auswurfschnecke umfasst.

11. Vorrichtung (10) nach Anspruch 10, **dadurch gekennzeichnet, dass** das Abstreifelement (12) eine Produktabstreifkante (33) und eine Produktleitfläche (34) umfasst, wobei die Produktleitfläche (34) derart geformt und/oder ausgerichtet ist, dass das von der Innenfläche der Hohltrommel (12) mittels der Produktabstreifkante (33) abgestreifte Separiergut in Richtung der offenen Stirnseite (Sv) der Hohltrommel (12) geleitet wird.

12. Verfahren zum Trennen von miteinander vermischten Stoffen unterschiedlicher Fließfähigkeit, umfassend die Schritte:
- Zuführen eines aus Pressgut bestehenden Produktstroms in einen Produkt-Einzugskeil (14), der durch eine Hohltrommel (12) mit perforierter Mantelfläche (M) und ein Pressband (13), das von außen an der Hohltrommel (12) unter Umschlingung eines Teils des Umfangs anliegt, gebildet ist,
- umlaufendes Antreiben der Hohltrommel (12) und/oder des Pressbandes (13) zum Einziehen des Produktstroms zwischen die Hohltrommel (12) und das Pressband (13),
- wobei die leichter fließenden Bestandteile des Produktstroms mittels des Pressbandes (13) als Separiergut durch die Perforation der Mantelfläche (M) der Hohltrommel (12) in den Hohlraum (H) der Hohltrommel (12) gepresst und aus einer mindestens teilweise offenen Stirnseite (S_{V}, S_{H}) der Hohltrommel (12) abgeführt werden, während die schwerer fließenden Bestandteile des Produktstroms außen auf der Mantelfläche (M) der Hohltrommel (12) verbleiben und separat abgegeben werden,
**dadurch gekennzeichnet, dass** das durch die perforierte Mantelfläche (M) in den Hohlraum (H) der Hohltrommel (12) gepresste Separiergut mittels eines kryogenen Kühlmediums (20) in der Hohltrommel (12) gekühlt wird, wobei das Separiergut direkt und unmittelbar während des Trennprozesses, also beim Pressen durch die Mantelfläche (M) und/oder beim Abführen aus der Hohltrommel (12), mit dem kryogenen Kühlmedium (20) beaufschlagt wird.

13. Verfahren nach Anspruch 12, **dadurch gekennzeichnet, dass** das Kühlmedium (20) linienförmig über die gesamte Breite (B) der Hohltrommel (12) auf das durch den Trennprozess zerkleinerte Separiergut aufgebracht wird.

14. Verfahren nach Anspruch 12 oder 13, **dadurch gekennzeichnet, dass** das Separiergut mit flüssigem Stickstoff (LIN bzw. LN₂) als kryogenem Kühlmedium (20) beaufschlagt wird.

15. Verfahren nach einem oder mehreren der Ansprüche 12 bis 14, **dadurch gekennzeichnet, dass** das Separiergut mit flüssigem Kohlendioxid (LIC bzw. LCO₂) als kryogenem Kühlmedium (20) beaufschlagt wird.

16. Verfahren nach einem oder mehreren der Ansprüche 12 bis 15, **dadurch gekennzeichnet, dass** über das Zuführen des Kühlmediums auf das Separiergut die Wunschtemperatur desselben gesteuert wird.

17. Verfahren nach einem oder mehreren der Ansprüche 12 bis 16, **dadurch gekennzeichnet, dass** das in den Hohlraum (H) der Hohltrommel (12) geleitete Kühlmedium (20) gesammelt und abgeführt wird.

18. Verfahren nach einem oder mehreren der Ansprüche 12 bis 17, **dadurch gekennzeichnet, dass** das gekühlte Separiergut von der Innenfläche der Hohltrommel (12) abgestreift und aus der Hohltrommel (12) abgeführt wird.

19. Verfahren nach einem oder mehreren der Ansprüche 12 bis 18, **dadurch gekennzeichnet, dass** es mit einer Vorrichtung (10) nach einem oder mehreren der Ansprüche 1 bis 11 ausgeführt wird.

## Claims

1. Apparatus (10), configured and adapted to separate substances of different flowability that are mixed together, comprising a frame structure (11), a hollow drum (12) which is driven in rotation and mounted on the frame structure (11) and has a perforated circumferential surface (M) and at least one at least partially open end side (S_{V}, S_{H}), an endless press belt (13) driven in rotation which is wrapped around part of the circumferential surface of the hollow drum (12) and can be pressed from outside against the hollow drum (12), a product intake wedge (14) formed by the press belt (13) and the hollow drum (12) for guiding into the apparatus (10) a product flow consisting of material to be pressed into the space between the hollow drum (12) and the press belt (13) in an inlet region (E) of the product flow, a support apparatus (15) for the press belt (13) with at least one support element (16) which is located on the side of the press belt (13) opposite the hollow drum (12), and a device (17) for discharging separation material pressed through the perforated circumferential surface (M) into the hollow space (H) of the hollow drum (12) from the at least partially open end side (S_{V}, S_{H}) of the hollow drum (12), **characterised in that** a cooling device (19) configured and adapted to cool the separation material during processing by means of a cryogenic cooling medium (20) is assigned to the hollow drum (12), wherein the cooling device (19) is disposed in the hollow space (H) of the hollow drum (12) and comprises at least one nozzle (26) which is connected to a reservoir of cooling medium (20) via a supply line (27).

2. Apparatus (10) according to claim 1, **characterised in that** the or each nozzle (26) is directed at least towards the area of the inner surface of the hollow drum (12) which is approximately opposite the area of the product intake wedge (14) and/or the pressing region (P) adjoining it.

3. Apparatus (10) according to claim 1 or 2, **characterised in that** the or each nozzle (26) is configured as a flat spray nozzle that has a nozzle opening forming a spray fan (27), such that the cooling medium (20) emerging from the nozzle is applied to the separation material pressed through the circumferential surface (M) in a linear fashion, extending over the entire width (B) of the hollow drum (12).

4. Apparatus (10) according to one or more of claims 1 to 3, **characterised in that** the or each nozzle (26) is assigned a cover (31) which at least partially covers the or each nozzle (26).

5. Apparatus (10) according to one or more of claims 1 to 4, **characterised in that** the cooling device (17) is assigned a device to collect and discharge the cooling medium (20) directed into the cavity (H) of the hollow drum (12).

6. Apparatus (10) according to claim 5, **characterised in that** the device for collecting the cooling medium comprises at least one cover hood and an exhaust fan connected to the cover hood via exhaust air pipes.

7. Apparatus (10) according to one or more of claims 1 to 6, **characterised in that** the or each supply line (27) for supplying the cryogenic cooling medium (20) to the or each nozzle (26) comprises a measuring and/or control section.

8. Apparatus (10) according to one or more of claims 1 to 7, **characterised in that** the cryogenic cooling medium (20) is liquid nitrogen (LIN or LN₂).

9. Apparatus (10) according to one or more of claims 1 to 7, **characterised in that** the cryogenic cooling medium (20) is liquid carbon dioxide (LIC or LCO₂).

10. Apparatus (10) according to one or more of claims 1 to 9, **characterised in that** the device (17) for discharging the separation material comprises a stripping element (32) and/or an ejection screw.

11. Apparatus (10) according to claim 10, **characterised in that** the stripping element (12) comprises a product stripping edge (33) and a product guiding surface (34), the product guiding surface (34) being shaped and/or aligned such that the separation material stripped from the inner surface of the hollow drum (12) by means of the product stripping edge (33) is guided in the direction of the open end side (Sv) of the hollow drum (12).

12. Method for separating substances of different flowability that are mixed together, comprising the following steps:
- Feeding a product flow, consisting of material to be pressed, into a product intake wedge (14) which is formed by a hollow drum (12) with a perforated circumferential surface (M) and a press belt (13) which lies against the outside of the hollow drum (12) while wrapping around part of its circumference,
- driving the hollow drum (12) and/or the press belt (13) in rotation in order to draw the product flow between the hollow drum (12) and the press belt (13),
- the easier-flowing constituents of the product flow being pressed by means of the press belt (13) as separation material through the perforation of the circumferential surface (M) of the hollow drum (12) into the hollow space (H) of the hollow drum (12) and discharged from an at least partially open end side (S_{V}, S_{H}) of the hollow drum (12), while the harder-flowing constituents of the product flow remain on the outside of the circumferential surface (M) of the hollow drum (12) and are discharged separately.
**characterised in that** the separation material that is pressed through the perforated circumferential surface (M) into the hollow space (H) of the hollow drum (12) is cooled in the hollow drum (12) by means of a cryogenic cooling medium (20), wherein the separation material is directly and immediately exposed to the cryogenic cooling medium (20) during the separation process, that is to say, on being pressed through the circumferential surface (M) and/or on being discharged from the hollow drum (12).

13. Method according to claim 12, **characterised in that** the cooling medium (20) is applied in a linear fashion over the entire width (B) of the hollow drum (12) to the separation material that has been shredded by the separation process.

14. Method according to claim 12 or 13, **characterised in that** liquid nitrogen (LIN or LN₂) is applied to the separation material as the cryogenic cooling medium (20).

15. Method according to one or more of claims 12 to 14, **characterised in that** liquid carbon dioxide (LIC or LCO₂) is applied to the separation material as the cryogenic cooling medium (20).

16. Method according to one or more of claims 12 to 15, **characterised in that** the desired temperature of the separation material is controlled by supplying cooling medium to the separation material.

17. Method according to one or more of claims 12 to 16, **characterised in that** the cooling medium (20) directed into the hollow space (H) of the hollow drum (12) is collected and discharged.

18. Method according to one or more of claims 12 to 17, **characterised in that** the cooled separation material is stripped from the inner surface of the hollow drum (12) and discharged from the hollow drum (12).

19. Method according to one or more of claims 12 to 18, **characterised in that** it is carried out with an apparatus (10) according to one or more of claims 1 to 11.

## Revendications

1. Dispositif (10), configuré et adapté pour séparer des substances ayant des fluidités différentes mélangées entre elles, comprenant un bâti (11), un tambour creux (12) entraîné en rotation et monté sur le bâti (11), avec une surface d'enveloppe (M) perforée et au moins un côté frontal (S_{V}, S_{H}) au moins partiellement ouvert, une bande de pressage (13) sans fin pouvant être pressée de l'extérieur contre la surface d'enveloppe en s'enroulant autour d'une partie de la périphérie du tambour creux (12), qui est entraînée en rotation, un coin d'introduction de produit (14) formé par la bande de pressage (13) et le tambour creux (12) pour guider un flux de produit constitué de matière à presser entre le tambour creux (12) et la bande de pressage (13) dans une zone d'entrée (E) du flux de produit dans le dispositif (10), un dispositif de support (15) pour la bande de pressage (13) avec au moins un élément de support (16) qui est agencé sur le côté de la bande de pressage (13) opposé au tambour creux (12), ainsi qu'un appareil (17) pour évacuer du côté frontal (S_{V}, S_{H}) au moins partiellement ouvert du tambour creux (12) la matière à séparer pressée à travers la surface d'enveloppe (M) perforée dans la cavité (H) du tambour creux (12), **caractérisé en ce qu'**au tambour creux (12) est associé un appareil de refroidissement (19) qui est configuré et adapté pour refroidir la matière à séparer pendant le traitement au moyen d'un fluide de refroidissement cryogénique (20), l'appareil de refroidissement (19) étant agencé dans la cavité (H) du tambour creux (12) et comprenant au moins une buse (26) qui est en liaison avec un réservoir de fluide de refroidissement (20) par l'intermédiaire d'une conduite d'amenée (27).

2. Dispositif (10) selon la revendication 1, **caractérisé en ce que** la ou chaque buse (26) est dirigée au moins vers la zone de la surface intérieure du tambour creux (12) qui est approximativement opposée à la zone du coin d'introduction de produit (14) et/ou à la zone de pressage (P) qui s'y raccorde.

3. Dispositif (10) selon la revendication 1 ou 2, **caractérisé en ce que** la ou chaque buse (26) est configurée sous forme de buse à jet plat, qui présente une ouverture de buse pour former un éventail de pulvérisation (27), de telle sorte que le fluide de refroidissement (20) sortant de la buse assure une sollicitation linéaire et s'étendant sur toute la largeur (B) du tambour creux (12) de la matière à séparer pressée à travers la surface d'enveloppe (M).

4. Dispositif (10) selon une ou plusieurs des revendications 1 à 3, **caractérisé en ce que** la ou chaque buse (26) est associée à un couvercle (31) qui recouvre au moins partiellement la ou chaque buse (26).

5. Dispositif (10) selon une ou plusieurs des revendications 1 à 4, **caractérisé en ce que** l'appareil de refroidissement (17) est associé à un appareil de collecte et d'évacuation du fluide de refroidissement (20) guidé dans la cavité (H) du tambour creux (12).

6. Dispositif (10) selon la revendication 5, **caractérisé en ce que** l'appareil de collecte du fluide de refroidissement comprend au moins un capot et un ventilateur d'évacuation relié au capot par des conduits d'évacuation d'air.

7. Dispositif (10) selon une ou plusieurs des revendications 1 à 6, **caractérisé en ce que** la ou chaque conduite d'amenée (27) pour amener le fluide de refroidissement cryogénique (20) à la ou chaque buse (26) comprend une section de mesure et/ou de régulation.

8. Dispositif (10) selon une ou plusieurs des revendications 1 à 7, **caractérisé en ce que** le fluide de refroidissement cryogénique (20) est de l'azote liquide (LIN ou LN₂).

9. Dispositif (10) selon une ou plusieurs des revendications 1 à 7, **caractérisé en ce que** le fluide de refroidissement cryogénique (20) est du dioxyde de carbone liquide (LIC ou LCO₂).

10. Dispositif (10) selon une ou plusieurs des revendications 1 à 9, **caractérisé en ce que** l'appareil (17) d'évacuation de la matière à séparer comprend un élément de raclage (32) et/ou une vis d'éjection.

11. Dispositif (10) selon la revendication 10, **caractérisé en ce que** l'élément de raclage (12) comprend un bord de raclage de produit (33) et une surface de guidage de produit (34), la surface de guidage de produit (34) étant formée et/ou orientée de telle sorte que la matière à séparer raclée de la surface intérieure du tambour creux (12) au moyen du bord de raclage de produit (33) est guidée en direction du côté frontal ouvert (Sv) du tambour creux (12).

12. Procédé de séparation de substances ayant des fluidités différentes mélangées entre elles, comprenant les étapes :
- l'amenée d'un flux de produit constitué de matière à presser dans un coin d'introduction de produit (14), qui est formé par un tambour creux (12) avec une surface d'enveloppe (M) perforée et une bande de pressage (13), qui s'applique de l'extérieur contre le tambour creux (12) en s'enroulant autour d'une partie de la périphérie,
- l'entraînement en rotation du tambour creux (12) et/ou de la bande de pressage (13) pour tirer le flux de produit entre le tambour creux (12) et la bande de pressage (13),
- les constituants plus fluides du flux de produit étant pressés au moyen de la bande de pressage (13) en tant que matière à séparer à travers la perforation de la surface d'enveloppe (M) du tambour creux (12) dans la cavité (H) du tambour creux (12) et étant évacués d'un côté frontal (Sv, S_{H}) au moins partiellement ouvert du tambour creux (12), tandis que les constituants moins fluides du flux de produit restent à l'extérieur sur la surface d'enveloppe (M) du tambour creux (12) et sont délivrés séparément,
**caractérisé en ce que** la matière à séparer pressée dans la cavité (H) du tambour creux (12) à travers la surface d'enveloppe (M) perforée est refroidie dans le tambour creux (12) au moyen d'un fluide de refroidissement cryogénique (20), la matière à séparer étant directement et immédiatement sollicitée avec le fluide de refroidissement cryogénique (20) pendant le processus de séparation, c'est-à-dire lors du pressage à travers la surface d'enveloppe (M) et/ou lors de l'évacuation hors du tambour creux (12).

13. Procédé selon la revendication 12, **caractérisé en ce que** le fluide de refroidissement (20) est appliqué de manière linéaire sur toute la largeur (B) du tambour creux (12) sur la matière à séparer broyée par le processus de séparation.

14. Procédé selon la revendication 12 ou 13, **caractérisé en ce que** la matière à séparer est sollicitée avec de l'azote liquide (LIN ou LN₂) en tant que fluide de refroidissement cryogénique (20).

15. Procédé selon une ou plusieurs des revendications 12 à 14, **caractérisé en ce que** la matière à séparer est sollicitée avec du dioxyde de carbone liquide (LIC ou LCO₂) en tant que fluide de refroidissement cryogénique (20).

16. Procédé selon une ou plusieurs des revendications 12 à 15, **caractérisé en ce que** la température souhaitée de la matière à séparer est commandée par l'amenée du fluide de refroidissement sur celui-ci.

17. Procédé selon une ou plusieurs des revendications 12 à 16, **caractérisé en ce que** le fluide de refroidissement (20) guidé dans la cavité (H) du tambour creux (12) est collecté et évacué.

18. Procédé selon une ou plusieurs des revendications 12 à 17, **caractérisé en ce que** la matière à séparer refroidie est raclée de la surface intérieure du tambour creux (12) et évacuée du tambour creux (12).

19. Procédé selon une ou plusieurs des revendications 12 à 18, **caractérisé en ce qu'**il est mis en oeuvre avec un dispositif (10) selon une ou plusieurs des revendications 1 à 11.
